# EUROPÄISCHE PATENTSCHRIFT

(11) **EP 2 112 101 B1**
(45) Veröffentlichungstag und Bekanntmachung des Hinweises auf die Patenterteilung: **19.10.2011**
(21) Anmeldenummer: 09156008.6
(22) Anmeldetag: 24.03.2009
(51) Int. Cl.: B65G 57/00, B65G 57/24

(54) **Vorrichtung und Verfahren zum Palettieren von Stückgutzusammenstellungen**
Method and device for paletting piece good collections
Dispositif et procédé destinés à la palettisation d'assemblages de marchandises au détail

(30) Priorität: 23.04.2008 DE 102008020486
(43) Veröffentlichungstag der Anmeldung: 28.10.2009
(73) Patentinhaber: KRONES Aktiengesellschaft, 93073 Neutraubling (DE)
(72) Erfinder: Perl, Kurt, 83253 Rimsting (DE)
(74) Vertreter: Bittner, Bernhard

(56) Entgegenhaltungen:
- EP-A- 0 893 379
- DE-A1- 3 627 577
- US-A- 5 375 493

## Beschreibung

Die vorliegende Erfindung bezieht sich auf eine Vorrichtung und ein Verfahren zum Palletieren von Stückgutzusammenstellungen gemäß den Oberbegriffender Ansprüche 1 und 10, wie sie aus der US 5,375,493 bekannt sind.

Palletierer sind aus dem Stand der Technik bekannt. Dabei wird zum Beladen einer Palette zunächst eine leere Palette in einer Ladestation bereitgestellt und auf diese werden anschließend lagenweise Gebinde wie beispielsweise Flaschenkästen, Einweggebinde oder dergleichen abgelegt. Üblicherweise werden dabei zwischen einzelnen Gebindelagen Zwischenlagen beispielsweise aus Papier oder Karton angeordnet.

Aus der DE 29 45 883 A1 ist eine Vorrichtung zum Beladen von Paletten mit Stückgütern bekannt. Diese Vorrichtung weist quer zu einer Lagenüberschubrichtung verlaufende Abstützschienen auf, in denen eine Unterstützungsebene geführt ist.

Aus der DE 92 02 553.6 U ist eine Vorrichtung zum Auflösen und Bilden von Stückgutstapeln bekannt. Diese Vorrichtung weist eine Vielzahl von Vakuumgreifern auf, welche die Stückgüter selbst von oben greifen. Unterhalb dieser Vakuumgreifer ist eine Abstützebene in Form eines Rollenteppichs vorgesehen, der unter die Stückgutlage verfahren werden kann. Daneben sind Klemmleisten vorgesehen, um die Stückgutlagen einzuklemmen.

Aus der US 4,998,399 ist eine Packmaschine für PET-Flaschen bekannt. Dabei werden Behältnisse wie Flaschen 5 jeweils in Verpackungen 7 gepackt, wobei diese Verpackungen über ein Transportband an die Flaschen herangeführt werden.

Aus der US 5,375,493 sind ein Verfahren und eine Vorrichtung zum Zuführen von Trennblättern an einen Stapel bekannt. Dabei werden diese Trennblätter von einer Rolle abgezogen.

Weiterhin ist es aus dem Stand der Technik bekannt, dass derartige Palletieranlagen jeweils in Abfolge eine Zwischenlage, anschließend eine Gebindelage und anschließend wieder eine Zwischenlage aufeinander anordnen. Dieses Verfahren ist jedoch relativ zeitintensiv.

Der vorliegenden Erfindung liegt daher die Aufgabe zugrunde, eine Palletieranlage zur Verfügung zu stellen, welche eine höhere Palletiergeschwindigkeit erlaubt.

Dies wird erfindungsgemäß durch eine Vorrichtung nach Anspruch 1 sowie ein Verfahren nach Anspruch 10 erreicht. Vorteilhafte Ausführungsformen und Weiterbildungen sind Gegenstand der Unteransprüche.

Eine erfindungsgemäße Vorrichtung zum Bilden von Stapeln aus Stückgutzusammenstellungen weist eine bewegliche Transporteinrichtung zum Transportieren der Stückgutzusammenstellung auf, sowie eine Heranführungseinheit, um Zwischenlagen an die Stückgutzusammenstellung heranzuführen. Dabei ist die Vorrichtung derart gestaltet, dass sie einen langgestreckten Materialstreifen, der aus dem Material der Zwischenlagen besteht, übernimmt, wobei von diesem langestreckten Materialstreifen die Zwischenlagen abtrennbar sind und vorzugsweise die Vorrichtung eine Trenneinrichtung aufweist, welche von dem Materialstreifen die Zwischenlagen abtrennt. Erfindungsgemäß liegt der Materialstreifen in mehrfach gefalteter Form vor.

Vorzugsweise weist die Vorrichtung ein erstes Reservoir bzw. eine erste Spendeeinrichtung auf, welches den langgestreckten Materialstreifen aufnimmt und die Heranführungseinheit ist derart gestaltet, dass sie den langgestreckten Materialstreifen von diesem Reservoir übernimmt. Vorzugsweise ist ein Bereich der Heranführunseinheit unmittelbar neben dem Reservoir angeordnet.

Während im Stand der Technik Zwischenlagen vereinzelt zugeführt werden, wird erfindungsgemäß vorgeschlagen, die Zwischenlagen zunächst als Endlosband zuzuführen und unmittelbar vor der eigentlichen Palettierung die jeweiligen Zwischenlagen abzutrennen. Unter einem Reservoir wird dabei jede Aufnahmeeinheit für die Zwischenlagen verstanden. Im ein fachsten Fall handelt es sich bei dem Reservoir um eine Ablageeinheit oder auch den Boden, auf dem ein Stapel bzw. der Materialstreifen abgelegt ist. Vorzugweise handelt es sich jedoch um ein wenigstens teilweise offenes Gehäuse oder Gestell, aus dem der Materialstreifen herausgezogen werden kann.

Vorzugsweise nimmt das Reservoir den Materialstreifen in mehrfach gefalteter Form auf. Dabei handelt es sich hier bevorzugt um einen sogenannten Endlosstreifen, der jeweils in regelmäßigen Abständen wieder derart umgeknickt ist, dass sich der Streifen jeweils um 180° wendet und auf diese Weise ein Stapel gebildet wird. Auf diese Weise kann das Reservoir sehr einfach ausgeführt werden, insbesondere ohne Abwickeleinheit wie Walzen oder dergleichen. Bevorzugt weist das Reservoir einen Hohlraum auf, dessen Querschnitt größer ist als die Fläche, die durch die Breite des Materialstreifens und den Abstand zweier Faltstellen, an denen der Materialstreifen umgeknickt ist, gebildet wird. Der Hohlraum kann dabei auch durch begrenzende Stangen eines Gestells gebildet werden. In diesem Hohlraum kann der mehrfach gefaltete Endlosstreifen liegend angeordnet sein.

Das Reservoir weist bevorzugt einen Entnahmebereich auf, über den der Materialstreifen entnommen wird, wobei dieser Entnahmebereich oberhalb eines oberen Endes eines mehrfach gefalteten Materialstreifens angeordnet ist.

Vorzugsweise weist die Trenneinrichtung eine Schneideinheit auf, welche den Materialstreifen bevorzugt in einer senkrecht zu der Transportrichtung des Materialstreifens verlaufenden Richtung schneidet. Anstelle des Schneidwerkzeugs könnte jedoch auch ein erhitzbarer Draht verwendet werden, der den Materialstreifen jeweils an den vorgegebenen Stellen durchtrennt.

Bei einer weiteren vorteilhaften Ausführungsform weist die Vorrichtung eine erste Walzeneinheit mit zwei gegenüberliegenden Walzen auf, zwischen denen der Materialstreifen führbar ist. Vorzugsweise ist wenigstens eine der beiden Walzen angetrieben. Es wäre jedoch auch möglich, dass die beiden Walzen nicht angetrieben sind und lediglich durch eine weitere Antriebsrichtung der Materialstreifen hindurchgezogen wird. Durch diese beiden Walzen wird eine besonders präzise Führung des Materialstreifens erreicht. Durch die Zuführung des Materialstreifens kann weiterhin sehr präzise die Lage des Materialstreifens und damit auch der Zwischenlagen vorgegeben werden. Bei einer weiteren vorteilhaften Ausführungsform weist die Vorrichtung eine zweite Walzeneinheit mit zwei einander gegenüberliegenden Walzen auf, zwischen denen der Materialstreifen führbar ist. Vorzugsweise sind diese beiden Walzeneinheiten in der Transportrichtung des Materialstreifens hintereinander angeordnet.

Vorzugsweise schließt sich an die beiden Walzeneinheiten ein Transportband an, welches die nunmehr geschnittenen Zwischenlagen an die Stückgutzusammenstellung heranführt bzw. unter diese Stückgutzusammenstellung führt.

Vorzugsweise ist die Trenneinrichtung bzw. ein Schneid- oder Trennelement der Trenneinrichtung zwischen der ersten Walzeneinheit und der zweiten Walzeneinheit angeordnet. Auf diese Weise wird ein besonders exakter Brenn- bzw. Schneidevorgang des Materialstreifens erreicht und auf diese Weise kann eine jeweils exakte Dimensionierung der Zwischenlage erreicht werden. Vorzugsweise ist wenigstens eine der beiden Walzen der zweiten Walzeneinheit angetrieben um auf diese Weise einen Vorschub der Zwischenlage zu erreichen.

Bei einer weiteren vorteilhaften Ausführungsform weist die Vorrichtung ein zweites Reservoir auf, welches einen langgestreckten Materialstreifen aufnimmt. Vorzugsweise sind daher zwei zueinander parallel arbeitende Reservoirs vorgesehen, welche einen nahtlosen Übergang gewährleisten, wenn beispielsweise einer der beiden Materialstreifen zu Ende ist.

Vorzugsweise ist die Heranführungseinheit derart gestaltet, dass sie den Materialstreifen von dem Reservoir übernimmt.

Bevorzugt ist eine Abstützeinrichtung vorgesehen, die unter die Stückgutzusammenstellung bewegbar und die im Wesentlichen vollständig aus einem unterhalb der Stückgutzusammenstellung liegenden Bereich entfernbar ist. Bevorzugt weist die Transporteinrichtung wenigstens eine steuerbare Fixiereinrichtung zum vorübergehenden Fixieren einer Zwischenlage auf, wobei diese Fixiereinrichtung zum Fixieren der Zwischenlage unterhalb der Abstützeinrichtung bewegbar ist.

Damit wird hier vorgeschlagen, dass die Transporteinrichtung für die Stückgutzusammenstellungen bzw. die Gebindelagen kombiniert wird mit einer Fixiereinrichtung für die zwischen die Gebindelagen anzuordnende Zwischenlage. Auf diese Weise kann mit Hilfe nur einer Vorrichtung schneller ein Stapel gebildet werden. Bei den Stückgutzusammenstellungen handelt es sich, wie oben erwähnt, um die zu pallentierenden Lagen an Gebinden. Zum Palletieren kann beispielsweise mit Hilfe der erfindungsgemäßen Vorrichtung zunächst eine Zwischenlage abgelegt werden und dann oberhalb der Zwischenablage eine Stückgutzusammenstellung und dieser Vorgang anschließend wiederholt werden. Damit kann eine wesentliche Beschleunigung dieses erfindungsgemäßen Verfahrens erreicht werden.

Bevorzugt führt die Zuführeinrichtung die Stückgutzusammenstellung der Transporteinrichtung quer zu, d.h. die Stückgutzusammenstellung wird im Wesentlichen in einer horizontalen Richtung geführt. Die Transporteinrichtung weist bevorzugt eine seitliche Öffnung auf, durch welche hindurch die Stückgutzusammenstellung in die Transporteinrichtung hinein geschoben werden kann. Unter einem Bewegen unter die Stückgutzusammenstellung wird verstanden, dass die Fixiereinrichtung in eine Position bewegt werden kann, welche tiefer liegt als die Stückgutzusammenstellung. Dabei ist es auch denkbar, dass die Fixiereinrichtung innerhalb eines Bereiches, der unterhalb der Stückgutzusammenstellung liegt, bewegt wird.

Unter einer Fixiereinrichtung wird eine Einrichtung verstanden, welche in der Lage ist, eine Zwischenlage zumindest vorübergehend an der Transporteinrichtung zu halten.

Vorzugsweise ist die Fixiereinrichtung derart in die Abstützeinrichtung integriert, dass ihre Bewegung an die Bewegung der Abstützeinrichtung gekoppelt ist. Für das Verfahren ist es damit möglich, zunächst eine Zwischenablage abzulegen und anschließend die Abstützeinrichtung gemeinsam mit der Fixiereinrichtung aus dem Bereich unterhalb der Stückgutzusammenstellung zu entfernen. Vorzugsweise ist die Fixiereinrichtung zur Durchführung des Fixiervorgangs in einem Bereich angeordnet, der unterhalb der Abstützeinrichtung liegt, so dass die Zwischenlage unterhalb der Stückgutzusammenstellung gehalten werden kann.

Bei einer weiteren vorteilhaften Ausführungsform weist die Abstützeinrichtung eine Vielzahl von drehbaren Körpern auf, denen gegenüber die Stückgutzusammenstellung abstützbar ist. Wie oben erwähnt, ist es in einem Verfahrensschritt nötig, die Abstützeinrichtung gegenüber der Stückgutzusammenstellung zu bewegen. Um zu verhindern, dass durch diesen Vorgang beispielsweise Folien zerrissen werden, sind die erwähnten drehbaren Körpern vorgesehen, welche ein Abrollen gegenüber der Stückgutzusammenstellung ermöglichen.

Bei einer weiteren vorteilhaften Ausführungsform ist die Abstützeinrichtung in der Ebene einer Bodenfläche der Stückgutzusammenstellung gegenüber der Stückgutzusammenstellung bewegbar. Genauer gesagt ist es möglich, die Abstützeinrichtung vorhangartig gegenüber der Stückgutzusammenstellung zu verschieben. Zu diesem Zweck werden die drehbaren Körper oder diese drehbaren Körper tragende Wellen oder Achsen in zweiseitigen Schienen geführt.

Bei einer weiteren vorteilhaften Ausführungsform weist die Fixiereinrichtung wenigstens ein Fixierelement auf, welches zwischen zwei drehbaren Körpern angeordnet ist. Genauer gesagt, sind die Fixierelemente in dem aus einer Vielzahl von drehbaren Körpern gebildeten Vorhang integriert.

Bei einer weiteren vorteilhaften Ausführungsform weist die Fixiereinrichtung einen leistenförmigen Körper auf, der in zwei seitlichen Schienen gemeinsam mit den drehbaren Körpern bewegbar ist. Dies bedeutet, dass ein derartiger leistenförmiger Körper beispielsweise zwischen zwei drehbaren Körpern angeordnet sein kann und damit gemeinsam mit diesen drehbaren Körpern gegenüber der Stückgutzusammenstellung verschiebbar ist.

Bei einer weiteren vorteilhaften Ausführungsform ist wenigstens ein Fixierelement ein steuerbarer Saugkopf. Damit wird vorgeschlagen, wenigstens einen derartigen Saugkopf in der Abstützeinrichtung, die bevorzugt als Jalousieteppich ausgeführt ist, anzubringen. Daneben wäre es jedoch auch möglich, eine Fixiereinrichtung beispielsweise in Form einer Klemmvorrichtung unterhalb der Abstützeinrichtung anzubringen. Unter einem steuerbaren Saugkopf wird verstanden, dass der Fixiervorgang durch den Benutzer oder durch eine Maschinensteuerung gesteuert werden kann, so dass wahlweise eine anzuhebende Zwischenlage aufgenommen und gelöst werden kann.

Bei einer weiteren bevorzugen Ausführungsform weist die Fixiereinrichtung zwei voneinander beabstandete leistenförmige Körper auf, wobei an jedem dieser leistenförmigen Körper wenigstens ein Fixierelement angeordnet ist und wobei zwischen diesen beiden leistenförmigen Körpern eine Vielzahl von drehbaren Körpern vorgesehen ist.

Vorzugsweise weist auch jeder dieser leistenförmigen Körper wenigstens zwei derartige Fixierelemente auf. Auf diese Weise kann in besonders vorteilhafter Weise über eine möglichst große Fläche der Zwischenlagen eine Vielzahl von derartigen Fixierelementen im Wesentlichen gleichförmig verteilt werden, so dass ein besonders effizienter Halt der Zwischenlagen möglich ist.

Bei einer weiteren vorteilhaften Ausführungsform weist die Abstützeinrichtung zwei zueinander im Wesentlichen symmetrisch ausgebildete Teilabschnitte auf. Zum Öffnen des Bodens der Transporteinrichtung schieben sich diese beiden Teilabschnitte auseinander und geben auf diese Weise den Bereich unterhalb der Stückgutzusammenstellung frei.

Bei einer weiteren vorteilhaften Ausführungsform ist die Transporteinrichtung in ihrer Gesamtheit an einem um eine vertikale Achse schwenkbaren Arm angeordnet. Auf diese Weise kann die Transporteinrichtung Stückgutzusammenstellungen greifen und an einer anderen Stelle, beispielsweise auf eine Palette, ablegen.

Bei einer weiteren vorteilhaften Ausführungsform weist die Vorrichtung eine Heranführungseinheit auf, welche die Zwischenlagen an eine Unterseite der Abstützeinrichtung heranführt. Auf diese Weise wird erreicht, dass die Transporteinrichtung, ohne über weite Strecken bewegt werden zu müssen, sowohl die Stückgutzusammestellung als auch die Zwischenlage aufnehmen kann.

Bei einer weiteren bevorzugten Ausführungsform weist die Transporteinrichtung eine Koppeleinrichtung auf, welche in einem Betriebszustand in Fluidverbindung mit der Fixiereinrichtung steht und die in einem weiteren Betriebszustand der Fixiereinrichtung von dieser getrennt ist. Genauer gesagt dient diese Koppeleinrichtung dazu, um ein Vakuum an die als Saugköpfe ausgestalteten Fixierelemente an der Abstützeinrichtung zu geben. In einem geschlossenen Zustand der Abstützeinrichtung bzw. des Rollenteppichs dockt die Koppeleinrichtung an die Saugleisten der Abstützeinrichtung an und anschließend kann diese mit einem Vakuum beaufschlagt werden.

Diese Koppeleinrichtung wird bevorzugt auch verwendet, um die Saugköpfe zeitweise mit Druckluft zu beaufschlagen, um auf diese Weise die jeweilige Zwischenlage von den Saugköpfen zu lösen. Vorzugsweise ist die Koppeleinrichtung schwenkbar ausgeführt und kann durch diesen Schwenkvorgang an die Leisten angelegt oder von diesen weggezogen werden.

Die vorliegende Erfindung ist weiterhin auf eine Transporteinrichtung zum Transportieren der Stückgutzusammenstellung gerichtet, mit einer Abstützeinrichtung, die unter die Stückgutzusammenstellung bewegbar ist und die im Wesentlichen vollständig aus einem senkrecht unterhalb der Stückgutzusammenstellung liegenden Bereich entfernbar ist.

Erfindungsgemäß weist die Transporteinrichtung wenigstens ein steuerbare Fixiereinrichtung zum vorübergehenden Fixieren einer Zwischenlage auf, wobei diese Fixiereinrichtung zum Fixieren der Zwischenlage unterhalb die Stückgutzusammenstellung bewegbar ist und wobei die Fixiereinrichtung derart in die Abstützeinrichtung integriert ist, dass ihre Bewegung und die Bewegung der Abstützeinrichtung gekoppelt ist.

Bei einem erfindungsgemäßen Verfahren zum Bilden von Stapeln von Stückgutzusammenstellungen und Zwischenlagen wird in einem Schritt eine erste Zwischenlage in einem ersten vorgegebenen Bereich mit einer Heranführungseinheit in einer ersten Transportrichtung herangeführt. Anschließend wird die Stückgutzusammenstellung mit einer Transporteinrichtung in den vorgegebenen Bereich geführt. Es wäre jedoch auch möglich, dass die Stückgutzusammenstellung zunächst in den Bereich geführt wird und erst anschließend die Zwischenlage unter die Stückgutzusammenstellung bewegt wird.

Unter dem vorgegebenen Bereich wird dabei insbesondere ein in einer Draufsicht von oben betrachteter Bereich verstanden. Es ist also möglich, dass der Materialstreifen unterhalb (oder auch oberhalb) der Stückgutzusammenstellung an diese herangeführt bzw. in den Bereich verbracht wird.

Erfindungsgemäß wird ein langgestreckter mehrfach gefalteter Materialstreifen, von dem die Zwischenlagen abtrennbar sind, der Heranführungseinheit zugeführt und mittels einer Trenneinrichtung von diesem Materialstreifen die Zwischenlagen abgetrennt. Damit wird auch bei dem erfindungsgemäßen Verfahren vorgeschlagen, die Zwischenlagen nicht einzeln zuzuführen, sondern mittels eines Endlosstreifens. Vorzugsweise wird der Materialstreifen aus einem Reservoir zugeführt.

Vorzugsweise werden die Zwischenlagen und die Stückgutzusammenstelllungen in jeweils die gleichen Bereiche geführt und dort jeweils gleichzeitig angeordnet d. h. zunächst eine Stückgutzusammenstellung anschließend eine Zwischenlage und danach wieder eine Stückgutzusammenstellung usw. Vorzugsweise wird die Stückgutzusammenstellung in einer Richtung transportiert, die nicht parallel zu der ersten Transportrichtung ist. Vorzugsweise ist die Richtung, in der die Stückgutzusammenstellung transportiert wird, senkrecht zu der Transporteinrichtung, in der die Zwischenlage transportiert wird.

Erfindungsgemäß wird der Materialstreifen in Form eines mehrfach gefalteten Streifens von der Heranführungseinheit übernommen. Auf diese Weise ist es möglich, den Materialstreifen in sehr platzsparender Art und Weise anzuordnen und gleichzeitig ist kein hoher Aufwand zum Entnehmen eines Materialstreifens nötig, sondern dieser kann einfach abgezogen werden.

Vorzugsweise weist der Materialstreifen eine Vielzahl von Faltstellen auf und die Abtrennung der Zwischenlagen erfolgt beabstandet von diesen Fallstellen. Auf diese Weise kann vermieden werden, dass bei einer zu nahen Anordnung der Trennlinie an den Faltstellen ein Verrutschen der jeweiligen Trenn- bzw. Schneideinrichtungen auftritt.

Bei einem weiteren vorteilhaften Verfahren schneidet die Trenneinrichtung den Materialstreifen in einer senkrecht zu der Transportrichtung verlaufenden Richtung.

Bei einem weiteren vorteilhaften Verfahren erfolgt die Zuführung des Materialstreifens an der Heranführungseinheit getaktet. Dies bedeutet, dass beispielsweise bei dem eigentlichen Trennvorgang der Materialstreifen angehalten werden kann um auf diese Weise in besonders einfacher Weise eine geradlinig verlaufende Trennung zu erreichen. Zum Trennen kann, wie oben erwähnt, ein Schneidmesser verwendet werden, es wäre jedoch auch möglich, beispielsweise Lasereinheiten zum Trennen einzusetzen.

Bevorzugt wird mittels einer an der Transporteinrichtung und bevorzugt an der Abstützeinrichtung angeordneten Fixiereinrichtung eine Zwischenlage wenigstens zeitweise von der Transporteinrichtung aufgenommen.

Damit wird auch dieses bevorzugte Verfahren sowohl die Stückgutzusammenstellung selbst als auch die Zwischenlage von der gleichen Transporteinrichtung gegriffen, so dass auch hier eine zeitliche Einsparung möglich ist.

Bevorzugt wird die Transporteinrichtung selbst mit der Stückgutzusammenstellung und mit der Zwischenlage durch eine Hubbewegung und ggf. auch durch eine Schwenkbewegung bewegt um die Zwischenlage und die Stückgutzusammenstellung beispielsweise auf einer Palette abzulegen.

Bei einem bevorzugten Verfahren wird die Fixiereinrichtung gemeinsam mit der Abstützeinrichtung gegenüber der Stückgutzusammenstellung bewegt. Damit ist auch hier die Fixiereinrichtung an die Abstützeinrichtung gekoppelt so dass auf diese Weise der gesamte Bewegungsvorgang vereinfacht werden kann.

Vorteilhafte Ausführungsformen und Weiterbildungen ergeben sich aus den beigefügten Zeichnungen:

Darin zeigen:
- Fig. 1: eine Darstellung einer erfindungsgemäßen Vorrichtung;
- Fig. 2: eine weitere Darstellung einer erfindungsgemäßen Vorrichtung;
- Fig. 3: eine Draufsicht auf eine erfindungsgemäße Vorrichtung;
- Fig. 4: eine Darstellung einer Trenneinrichtung für die erfindungsgemäße Vorrich- tung;
- Fig. 5: eine weitere Darstellung einer erfindungsgemäßen Vorrichtung;
- Fig. 6: eine Gesamtdarstellung einer erfindungsgemäßen Transporteinrichtung;
- Fig. 7: eine Draufsicht von unten auf eine erfindungsgemäße Transporteinrich- tung;
- Fig. 8: eine Seitenansicht einer erfindungsgemäßen Transporteinrichtung;
- Fig. 9: eine weitere Seitenansicht einer erfindungsgemäßen Transporteinrichtung; und
- Fig. 10: eine Detailansicht einer Fixiereinrichtung.

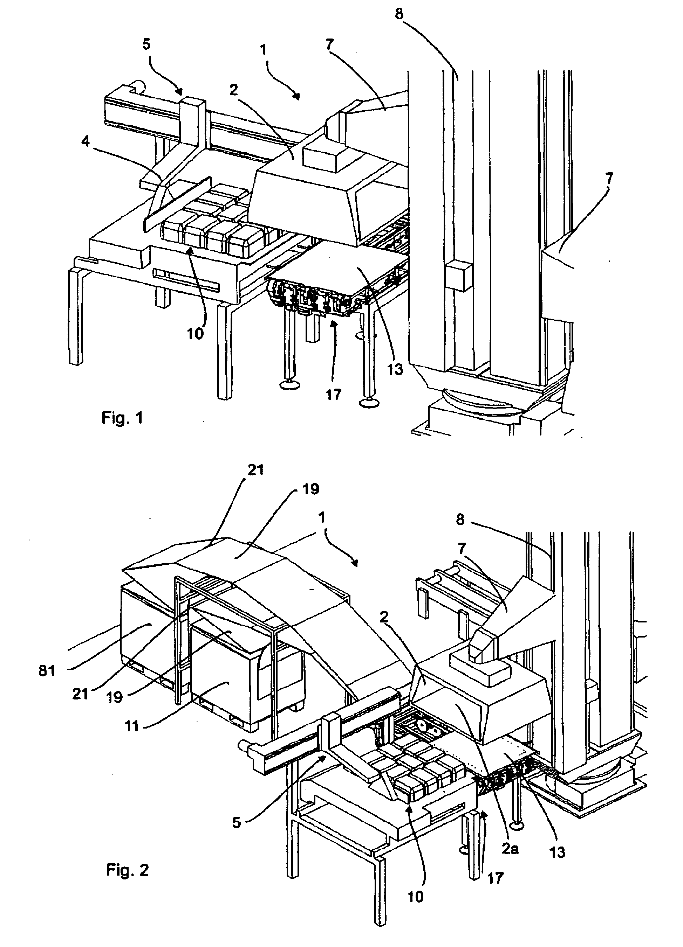

Figur 1 zeigt eine erfindungsgemäße Vorrichtung 1 zum Bilden von Stapeln aus Stückgutzusammenstellungen 10. Dabei bezieht sich das Bezugszeichen 4 auf eine Schiebeeinrichtung, die Bestandteil einer Zuführeinrichtung 5 ist und welche die Stückgutzusammenstellungen 10 in eine Transporteinrichtung 2 hinein schiebt. Daneben werden auch von unten Zwischenlagen 13 an diese Transporteinrichtung 2 herangeführt.

Die Transporteinrichtung 2 ist an einem Arm 7 bevorzugt drehbar angeordnet. Dieser Arm 7 ist wiederum an einem zentralen drehbaren Gestell 8 angeordnet. Auf diese Weise können die aufgenommen Stückgutzusammenstellungen 10 gemeinsam mit einer Zwischenlage 13 auf eine Palette gefördert werden. Ein weiterer entsprechender Arm 7, an dem eine weitere Transporteinrichtung 2 vorgesehen ist, ist ansatzweise auf der rechten Seite in Figur 1 erkennbar.

Figur 2 zeigt eine weitere Ansicht der in Figur 1 gezeigten Vorrichtung 1. Zusätzlich ist hier auch ein Reservoir 11 für Zwischenlagen 13 erkennbar. Weiterhin ist vorzugsweise auch eine Schneideeinrichtung (nicht dargestellt) vorgesehen, welche die einzelnen Zwischenlagen schneidet, damit diese unter die Transporteinrichtung 2 geführt werden können.

Man erkennt, dass die Stückgutzusammenstellungen 10 von der Seite her in die Transporteinrichtung 2 eingeschoben werden. Zu diesem Zweck weist die Transporteinrichtung 2 eine seitliche Öffnung 2a auf. Die Transporteinrichtung 2 selbst wird von oben her an die Zwischenlagen 13 herangeführt.

Das Reservoir 11 ist hier als Gestell ausgeführt, innerhalb dessen die ein Materialstreifen 19 angeordnet ist. Dieser Materialstreifen 19 ist dabei mehrfach gefaltet, wobei das Bezugszeichen 21 eine einzelne Faltstelle zeigt. Auf diese Weise kann der Materialstreifen 19 in sehr platzsparender Weise gelagert werden. Der Materialstreifen 19 wird bei der in Fig. 2 gezeigten Ausführungsform über das Gestell 11 hinweggezogen, so dass ein Auftreten von Verkantungen vermieden werden kann.

Die Rückseite des Gestells 11 wirkt hier als zweites Reservoir für einen zweiten Materialstreifen. Die beiden Materialstreifen 19 können alternativ einer Heranführungseinheit 17 zugeführt werden, so dass auch Zeiträume überbrückt werden, die entstehen, wenn ein Materialstreifen 19 aufgebraucht ist und ein neuer Materialstreifen 19 zugeführt werden muss.

Die Heranführungseinheit weist hier ein umlaufendes Transportband auf, welches die Zwischenlagen 13, die jeweils von dem Materialstreifen 19 abgetrennt werden, unter die Transporteinrichtung 2 fördert.

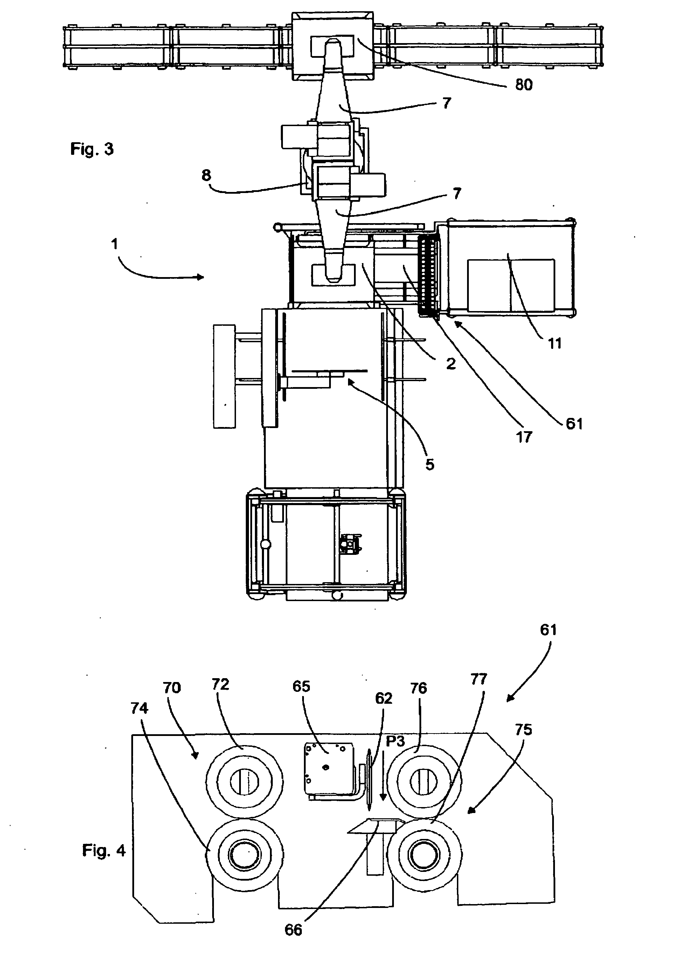

Fig.3 zeigt eine Draufsicht auf eine erfindungsgemäße Vorrichtung. Man erkennt hier, dass an dem Gestell 8 zwei Arme 7 mit jeweils einer Transporteinrichtung 2 angeordnet sind. Dieses Gestell 8 kann gedreht werden, um die Arme 7 mit den Transporteinrichtungen zwischen einem Transportband 80 und der Heranführungseinheit 17 zu bewegen.

Das Bezugszeichen 61 bezieht sich auf eine Trenneinrichtung, die zwischen dem Reservoir 11 und der Heranführungseinheit 17 angeordnet ist. Ausgehend von diesem Reservoir 11 wird der (nicht gezeigte) Materialstreifen in Richtung des Transportpfads T zu der Heranführunseinheit 17 transportiert und dabei schneidet die Trenneinrichtung 61 jeweils Zwischenlagen von dem Materialstreifen ab. Dabei kann die Länge dieser Zwischenlagen in der Richtung T durch den Benutzer eingestellt werden. Bevorzugt wird der Materialstreifen getaktet transportiert und auch der Transport der bereits geschnittenen Zwischenlagen erfolgt getaktet auf der Heranführungseinheit 17. Ein Trennvorgang bzw. Schnittvorgang findet bevorzugt statt, während der Materialstreifen ruht.

Fig. 4 zeigt eine Darstellung einer Trenneinrichtung 61. Diese Trenneinrichtung 61 weist eine erste Walzeneinheit 70 mit zwei Walzen 72, 74 auf, zwischen denen die Zwischenlage bzw. der Materialstreifen führbar ist. Das Bezugszeichen 75 bezieht sich auf eine zweite Walzeneinheit, welche ebenfalls zwei Walzen 76, 77 aufweist, zwischen denen der Materialstreifen führbar ist. Dabei weisen bevorzugt die beiden unteren Walzen 74 und 77 den gleichen Außendurchmesser auf und bevorzugt weisen auch die beiden oberen Walzen 72 und 76 den gleichen Durchmesser auf. Bevorzugt sind die Durchmesser aller Walzen gleich groß. Auch ist es möglich, dass die Drehungen der einzelnen Walzen 72, 74, 76, 77 aufeinander synchronisiert sind.

Zwischen den beiden Walzeneinheiten 70, 75 ist eine Schneideeinheit angeordnet, wobei diese Schneideeinheit einen Träger 65 sowie ein an diesem Träger 65 angeordnetes Schneidmesser 62, welches in der Richtung des Pfeils P3 beweglich ist, aufweist. Das Bezugszeichen 66 bezieht sich auf einen Schneidetisch, über den der Materialstreifen gelegt wird, um geschnitten zu werden.

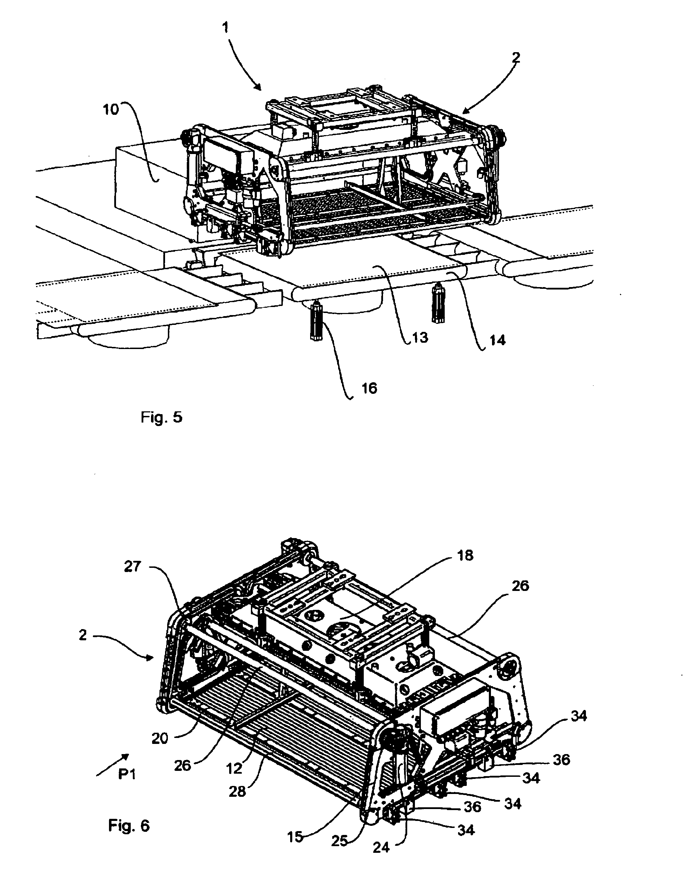

Figur 5 zeigt eine weitere Darstellung einer erfindungsgemäßen Vorrichtung 1. man erkennt hier, dass die Zwischenlagen 13 vorübergehend auf einen Tisch 14 abgelegt werden, bevor sie von einer Transporteinrichtung 2 ergriffen werden. Dieser Tisch 14 kann mittels höhenverstellbarer Füße 16 in seiner Höhe verstellt werden.

Figur 6 zeigt eine Transporteinrichtung 2. Diese weist zwei Seitenteile 15 auf, zwischen denen eine Abstützeinrichtung 6 angeordnet ist. Diese Abstützeinrichtung 6 weist dabei eine Vielzahl von drehbaren Körpern 12 auf. Zum Transport wird eine Stückgutzusammenstellung bzw. Gebindelage seitlich in Richtung des Pfeils P in die Transporteinrichtung 2 hinein geschoben und während dieses Vorgangs werden die drehbaren Körper 12, bei denen es sich um Rollen handelt, gedreht. Nachdem die Stückgutzusammenstellung in die Transporteinrichtung 2 hinein geschoben ist, kann die Transporteinrichtung die Stückgutzusammenstellung transportieren.

Weiterhin ist eine verschiebbare Stange 28 vorgesehen, welches die Stückgutzusammenstellung im Inneren der Transporteinrichtung 2 in Richtung des Pfeils P1 ausrichten kann. Zu diesem Zweck kann sich die Stange 28 in einer Schiene entlang des Pfeils P1 verschieben. Während die Stückgutzusammenstellung eingeführt wird, wird die nach Stange 28 nach oben beiseite gefahren, um das Einführen der Stückgutzusammenstellung nicht zu behindern.

Das Bezugszeichen 26 bezieht sich auf eine zwischen den beiden Seitenteile 15 angeordnete Welle. Diese Welle wird durch einen Motor 24 und ein Getriebe 25 gedreht. Mittels dieser Welle 26 und zwei an ihr angeordnete Zahnräder 27 (nur ein Zahnrad ist sichtbar) kann die Abstützeinrichtung 6 über eine offene Kette bewegt werden und somit den Bereich unterhalb der Stückgutzusammenstellung frei geben. Eine entsprechende Welle 26 ist auch an der in Fig. 6 hinteren Seite der Transporteinrichtung 2 vorgesehen.

Über einen Träger 18 kann die Transporteinrichtung 2 an einem Schwenkarm angeordnet werden. Die Vorrichtung weist weiterhin eine Schiene auf, in der die Abstützeinrichtung 6 verschoben werden kann, um den in Figur 1 durch die Abstützeinrichtung 6 geschlossenen Bereich zu öffnen. Das Bezugszeichen 34 bezieht sich auf die oben erwähnten Koppeleinrichtungen, um die leistenförmigen Körper bzw. Saugleisten 20 mit Vakuum zu versorgen. Dabei sind diese Koppeleinrichtungen 34 so gestaltet, dass sie nur in dem in Figur 1 gezeigten geschlossenen Zustand der Abstützeinrichtung ein Vakuum auf die Saugleisten aufbringen.

Nachdem die Stückgutzusammenstellung in die Transporteinrichtung 2 eingeschoben wurde oder auch davor, können in dem in Figur 1 gezeigten geschlossenen Zustand über die Koppeleinrichtungen 34 die Saugleisten 20 aktiviert werden um eine unterhalb der Transporteinrichtung 2 angeordnete Zwischenlage ansaugen bzw. aufnehmen und anschließend diese Zwischenlage gemeinsam mit der Stückgutzusammenstellung 2 transportieren. Durch diesen gemeinsamen Transport wird eine erhebliche Kostenersparung erreicht.

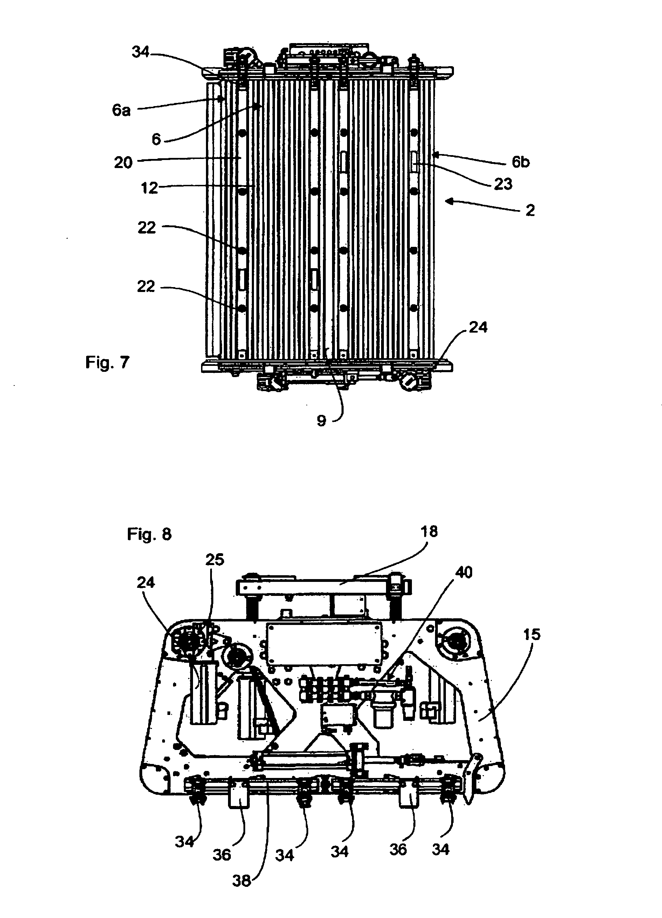

Figur 7 zeigt eine Draufsicht von unten auf eine erfindungsgemäße Transporteinrichtung 2. Man erkennt, dass hier vier leistenförmige Körper bzw. Saugleisten 20 in die Abstützeinrichtung 6 eingearbeitet sind. Dabei sind diese leistenförmigen Körper 20 jeweils zwischen drehbaren Körpern 12 angeordnet. Vorzugsweise sind die leistenförmigen Körper 20 derart bezüglich der drehbaren Körper angeordnet, dass nach oben hin der leistenförmige Körper 20 nicht mit den Stückgutzusammenstellungen in Berührung kommt. Bei der in Figur 2 gezeigten Ausführungsform setzt sich die Abstützeinrichtung 6 aus zwei im Wesentlichen symmetrisch zueinander ausgebildeten Teilabschnitten 6a und 6b zusammen.

Um die Stückgutzusammenstellung an ihren Zielort abzulegen werden die beiden Teilabschnitte 6a, 6b auseinander gezogen, so dass zwischen den beiden Teilabschnitten 6a, 6b eine Öffnung 9 frei gegeben wird, durch welche die Stückgutzusammenstellung nach unten fallen kann. Bei der in Figur 2 gezeigten Ausführungsform sind insgesamt vier leistenförmige Körper 20 vorgesehen an denen wiederum eine Vielzahl von Fixierelementen bzw. Saugelementen 22 vorgesehen ist. Durch die in Figur 2 gezeigte Anordnung wird eine sehr gleichmäßige Verteilung dieser Saugköpfe 22 über die gesamte Fläche der Transporteinrichtung 2 erreicht.

Damit ist es möglich, die Zwischenlagen während der Beladung des Jalousiekopfes (d.h. der Transporteinrichtung 2) durch die Transporteinrichtung 2 direkt unter der Beladefläche anzusaugen. Beim Ablegen der Stückgutzusammenstellung auf die Palette können somit durch Anfahren von nur einer Position die Zwischenlage und die Gebindelage abgelegt werden.

Das Bezugszeichen 34 zeigt auch hier eine Koppeleinrichtung, um die leistenförmigen Körper 20 und damit auch die einzelnen Saugelemente 22 mit Vakuum zu beaufschlagen. Das Bezugszeichen 23 bezieht sich auf Sensoreinrichtungen, die das Vorhandensein von Zwischenlagen feststellen. Dabei kann es sich beispielsweise um Tastsensoren oder Lichtsensoren handeln. Die einzelnen Saugelemente 22 sind separat betätigbar. Bevorzugt sind die Saugelemente 22 auch mit Druckluft beaufschlagbar, um die Zwischenlagen von diesen lösen zu können.

Figur 8 zeigt eine Seitenansicht einer erfindungsgemäßen Transporteinrichtung 2. Man erkennt hier ebenfalls Stützkörper 36, die als Transportsicherung dienen, um eine Beschädigung insbesondere der Koppeleinrichtungen 34 zu vermeiden. Nachdem dies erfolgt ist, werden die Zwischenlagen durch die in Figur 5 gezeigten Ansaugelemente angesaugt. Das Bezugszeichen 40 bezieht sich auf eine Vakuumverteileinrichtung, welche die einzelnen in Figur 2 gezeigten leistenförmigen Körper 20 mit Vakuum beaufschlagt. Daneben kann über diese Vakuumverteileinrichtung 40 auch Druckluft an die Koppeleinrichtungen 34 und damit die Saugelemente 22 ausgegeben werden.

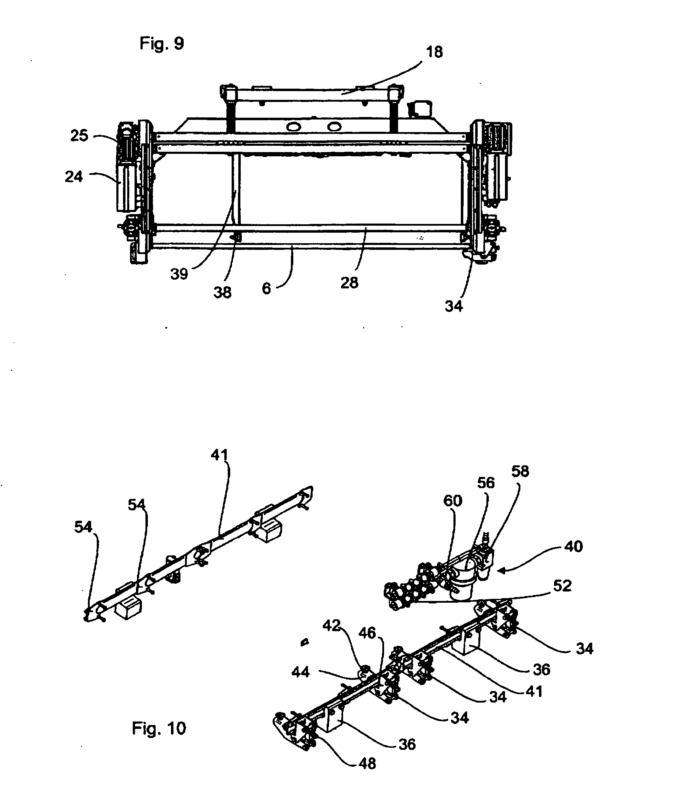

Figur 9 zeigt eine weitere Seitenansicht einer erfindungsgemäßen Transporteinrichtung. Man erkennt hier insbesondere eine weitere Verschiebeeinrichtung 38, die zum seitlichen Ausrichten der Gebindezusammenstellung dient. Diese weitere Verschiebeeinrichtung 38 ist dabei an einen Träger 39 angeordnet. Eine weitere (nicht gezeigte) Verschiebeeinrichtung ist an der gegenüberliegenden Seite der Transporteinrichtung 2 vorgesehen.

Das Bezugszeichen 28 bezieht sich wieder auf die Stange, welche ein Herausfallen der Gebinde aus der Transporteinrichtung 2 verhindert.

Figur 10 veranschaulicht die Zuführung des Vakuums an die (nicht gezeigten) leistenförmigen Körper aus Figur 2. Dabei sind hier insgesamt vier Koppeleinrichtungen vorgesehen, welche die leistenförmigen Körper 20 mit dem Vakuum beaufschlagen. Diese Koppeleinrichtungen 34 sind dabei in der Figur 5 gezeigten Ausführungsform an einem gemeinsamen Träger 41 angeordnet. Dieser Träger 41 wiederum ist über Verbindungseinrichtungen 54 an den Seitenteilen 15 der in Figur 1 gezeigten Transporteinrichtung angeordnet. Die Koppeleinrichtungen 34 weisen Koppelköpfe 42 auf, die nach unten schwenkbar sind.

Zu diesem Zwecke sind diese Koppelköpfe 42 an einem Auslegearm 44 angeordnet, der wiederum schwenkbar gegenüber einem Träger 46 angeordnet ist. Das Bezugszeichen 48 bezieht sich auf einen Anschluss, mit dem beispielsweise über einen Schlauch der Koppelkopf 42 mit Vakuum beaufschlagt werden kann. Auch kann über diesen Schlauch (Druck)luftzugeführt werden.

Das Bezugszeichen 40 zeigt auch hier die Vakuumverteileinrichtung, die jedoch nicht an der Figur 8 gezeigten Position angeordnet ist, sondern bevorzugt unterhalb des Trägers 41. Diese Vakuumverteileinrichtung 40 weist eine Vielzahl von Ausgängen 52 auf, an welche die oben erwähnten Schläuche zur Versorgung der einzelnen Koppelköpfe 42 angeschlossen sein können. Durch die Beaufschlagung der Koppelköpfe 42 mit einem Vakuum kann, wie oben erwähnt, eine Zwischenlage angezogen werden. Um die Zwischenlage abzusenken wird dieses Vakuum aufgehoben und bevorzugt zusätzlich Druckluft ausgegeben. Anschließend kann die Abstützeinrichtung 6 gegenüber den Koppelköpfen 42 bewegt werden. Damit ist es möglich, die Koppelköpfe 42 und die gesamte Koppeleinrichtung 34 stationär und damit weniger verschleißanfällig zu halten. Das Bezugszeichen 56 bezieht sich auf einen Filter, dem eine Venturidüse 58 nachgeschaltet ist. Die Vakuumverteileinrichtung 40 wird über einen Anschluss 60 mit Druckluft versorgt.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Vorrichtung
- 2: Transporteinrichtung
- 2a: seitliche Öffnung der Transporteinrichtung
- 4: Schiebeeinrichtung
- 5: Zuführeinrichtung
- 6: Abstützeinrichtung
- 6a, 6b: Teilabschnitt
- 7: Arm
- 8: Gestell
- 9: Öffnung
- 10: Stückgutzusammenstellung
- 11: Reservoir
- 12: drehbare Körper
- 13: Zwischenlagen
- 14: Tisch
- 15: Seitenteile
- 16: Fuß
- 17: Heranführungseinheit
- 18: Träger
- 19: Materialstreifen
- 20: Saugleisten
- 21: Faltstelle
- 22: Fixierelemente bzw. Saugelemente
- 23: Sensoreinrichtung
- 24: Motor
- 25: Getriebe
- 26: Welle
- 27: Zahnrad
- 28: Verschiebeelement
- 34: Koppeleinrichtungen
- 36: Stützkörper
- 38: weiteres Verschiebelement
- 39: Träger
- 40: Vakuumverteileinrichtung
- 42: Koppelköpfe
- 44: Auslegearm
- 46: Träger
- 48: Anschluss
- 52: Ausgänge
- 54: Verbindungseinrichtung
- 56: Filter
- 58: Venturidüse
- 60: Anschluss
- 62: Schneideelement
- 65: Träger
- 66: Schneidetisch
- 70, 75: Walzeneinheiten
- 72: obere Walze
- 74: untere Walze
- 76: obere Walze
- 77: untere Walze
- P1: Pfeil
- P3: Hubbewegung des Schneidelements
- T: Transportrichtung

## Patentansprüche

1. Vorrichtung (1) zum Bilden von Stapeln aus Stückgutzusammenstellungen (10) mit einer beweglichen Transporteinrichtung (2) zum Transportieren der Stückgutzusammenstellung (10), und mit einer Heranführungseinheit (17), um Zwischenlagen (13) an die Stückgutzusammenstellung (10) heranzuführen, wobei die Vorrichtung (1) derart gestaltet ist, dass sie einen langgestreckten Materialstreifen (19), der aus dem Material der Zwischenlagen (13) besteht, übernimmt, wobei von diesem langgestreckten Materialstreifen die Zwischenlagen (13) abtrennbar sind und die Vorrichtung eine Trenneinrichtung (61) aufweist, welche von dem Materialstreifen die Zwischenlagen (13) abtrennt.
**dadurch gekennzeichnet, dass**
der Materialstreifen in mehrfach gefalteter Form vorliegt.

2. Vorrichtung (1) nach Anspruch 1,
**dadurch gekennzeichnet, dass**
die Vorrichtung (1) ein Reservoir (11) aufweist, in dem der Materialstreifen (19) aufnehmbar ist.

3. Vorrichtung (1) nach wenigstens einem der vorangegangenen Ansprüche,
**dadurch gekennzeichnet, dass**
die Trenneinrichtung (61) eine Schneideeinheit aufweist, welche den Materialstreifen in einer senkrecht zu der Transportrichtung des Materialstreifens verlaufenden Richtung schneidet.

4. Vorrichtung (1) nach wenigstens einem der vorangegangenen Ansprüche,
**dadurch gekennzeichnet, dass**
die Trenneinrichtung (61) eine erste Walzeneinheit (70) mit zwei einander gegenüberliegenden Walzen (72, 74) aufweist, zwischen denen der Materialstreifen (19) führbar ist.

5. Vorrichtung (1) nach Anspruch 2,
**dadurch gekennzeichnet, dass**
die Trenneinrichtung (61) eine zweite Watzeneinheit (75) mit zwei einander gegenüberliegenden Walzen (76, 77) aufweist, zwischen denen der Materialstreifen (19) führbar ist.

6. Vorrichtung nach Anspruch 4,
**dadurch gekennzeichnet, dass**
ein Schneideelement (62) der Trenneinrichtung (61) zwischen der ersten Walzeneinheit (70) und der zweiten Walzeneinheit (75) angeordnet ist.

7. Vorrichtung (1) nach wenigstens einem der vorangegangenen Ansprüche,
**dadurch gekennzeichnet, dass**
die Vorrichtung (1) ein zweites Reservoir (81) aufweist, welches einen langgestreckten Materialstreifen (19) aufnimmt.

8. Vorrichtung (1) nach wenigstens einem der vorangegangenen Ansprüche,
**dadurch gekennzeichnet, dass**
die Transporteinrichtung (2) am einem um eine vertikale Achse schwenkbaren Arm (7) angeordnet ist.

9. Vorrichtung (1) nach wenigstens einem der vorangegangenen Ansprüche,
**dadurch gekennzeichnet, dass**
die Transporteinrichtung (2) eine Abstützeinrichtung (6) aufweist, die die Stückgutzusammenstellung wenigstens zeitweise abstützt und die Heranführungseinheit (17) unterhalb dieser Abstützeinrichtung (6) angeordnet ist.

10. Verfahren zum Bilden von Stapeln aus Stückgutzusammenstellungen (10) und Zwischenlagen (13) mit den Schritten:
- Heranführen einer ersten Zwischenlage (13) in einen ersten vorgegebenen Bereich mittels einer Heranführungseinheit (17) in einer ersten Transportrichtung (T)
- Transportieren der Stückgutzusammenstellung (10) mit einer Transporteinrichtung (2) in den vorgegebenen Bereich,
**dadurch gekennzeichnet, dass**
ein langgestreckter mehrfach gefalteter Materialstreifen, von dem die Zwischenlagen (13) abtrennbar sind der Heranführungseinheit (17) zugeführt wird und mittels einer Trenneinrichtung (61) von diesem Materialstreifen die Zwischenlagen (13) abgetrennt werden.

11. Verfahren nach wenigstens einem der vorangegangenen Ansprüchen,
**dadurch gekennzeichnet, dass** der Materialstreifen (19) eine Vielzahl von Faltstellen (21) aufweist und die Abtrennung der Zwischenlagen (13) beabstandet von diesen Faltstellen (21) erfolgt.

12. Verfahren nach wenigstens einem der vorangegangenen Ansprüche,
**dadurch gekennzeichnet, dass**
die Trenneinrichtung (61) den Materialstreifen (19) in einer senkrecht zu der Transportrichtung verlaufenden Richtung trennt.

13. Verfahren nach wenigstens einem der vorangegangenen Ansprüche,
**dadurch gekennzeichnet, dass**
die Zuführung des Materialstreifens (19) an die Heranführungseinheit (17) getaktet erfolgt.

## Claims

1. An apparatus (1) for forming stacks of sets (10) of piece goods with a movable conveying device (2) for conveying the set (10) of piece goods, and with an advancing unit (17) for advancing intermediate layers (13) to the set (10) of piece goods, wherein the apparatus (1) is designed in such a way that it takes on an elongate strip of material (19) which consists of the material of the intermediate layers (13), wherein the intermediate layers (13) are capable of being separated from this elongate strip of material and the apparatus has a separating device (61) which separates the intermediate layers (13) from the strip of material, **characterized in that** the strip of material is present in a multiply folded form.

2. An apparatus (1) according to claim 1, **characterized in that** the apparatus (1) has a reservoir (11) in which the strip of material (19) is capable of being received.

3. An apparatus (1) according to at least one of the preceding claims, **characterized in that** the separating device (61) has a cutting unit which cuts the strip of material in a direction extending at a right angle to the conveying direction of the strip of material.

4. An apparatus (1) according to at least one of the preceding claims, **characterized in that** the separating device (61) has a first roller unit (70) with two rollers (72, 74) which are situated opposite each other and between which the strip of material (19) is capable of being conveyed.

5. An apparatus (1) according to claim 2, **characterized in that** the separating device (61) has a second roller unit (75) with two rollers (76, 77) which are situated opposite each other and between which the strip of material (19) is capable of being conveyed.

6. An apparatus (1) according to claim 4, **characterized in that** a cutting element (62) of the separating device (61) is arranged between the first roller unit (70) and the second roller unit (75).

7. An apparatus (1) according to at least one of the preceding claims, **characterized in that** the apparatus (1) has a second reservoir (81) which receives an elongate strip of material (19).

8. An apparatus (1) according to at least one of the preceding claims, **characterized in that** the conveying device (2) is arranged on an arm (7) pivotable about a vertical axis.

9. An apparatus (1) according to at least one of the preceding claims, **characterized in that** the conveying device (2) has a support device (6) which supports the set of piece goods at least for a time, and the advancing unit (17) is arranged below this support device (6).

10. A method of forming stacks of sets (10) of piece goods and intermediate layers (13) with the steps:
- advancing a first intermediate layer (13) into a first pre-set region by means of an advancing unit (17) in a first conveying direction (T),
- conveying the set (10) of piece goods into the pre-set region by a conveying device (2),
**characterized in that** an elongate, multiply folded strip of material from which the intermediate layers (13) are capable of being separated is supplied to the advancing unit (17) and the intermediate layers (13) are separated from this strip of material by means of a separating device (61).

11. A method according to at least one of the preceding claims, **characterized in that** the strip of material (19) has a plurality of folding locations (21) and the separation of the intermediate layers (13) is carried out at a distance from these folding locations (21).

12. A method according to at least one of the preceding claims, **characterized in that** the separating device (61) separates the strip of material (19) in a direction extending at a right angle to the conveying direction.

13. A method according to at least one of the preceding claims, **characterized in that** the supply of the strip of material (19) to the advancing unit (17) is carried out in a clock-timed manner.

## Revendications

1. Dispositif (1) permettant de former des piles d'assortiments de marchandises (10), comportant un ensemble de transport (2) mobile destiné à transporter l'assortiment de marchandises (10) et une unité de rapprochement (17) destinée à rapprocher des intercalaires (13) de l'assortiment de marchandises (10), ledit dispositif (1) étant prévu pour prendre une bande de matière (19) allongée, formée avec la matière des intercalaires (13), les intercalaires (13) étant détachables de cette bande de matière allongée, et le dispositif comportant un ensemble séparateur (61) détachant les intercalaires (13) de la bande de matière, **caractérisé en ce que** la bande de matière se présente sous une forme à pliures multiples.

2. Dispositif (1) selon la revendication 1, **caractérisé en ce que** le dispositif (1) comprend un réservoir (11) pouvant recevoir la bande de matière (19).

3. Dispositif (1) selon au moins une des revendications précédentes, **caractérisé en ce que** l'ensemble séparateur (61) comprend une unité de découpe qui découpe la bande de matière dans une direction perpendiculaire à la direction de transport de la bande de matière.

4. Dispositif (1) selon au moins une des revendications précédentes, **caractérisé en ce que** l'ensemble séparateur (61) comprend une unité à rouleaux (70) avec deux rouleaux (72, 74) opposés l'un à l'autre, entre lesquels la bande de matière (19) peut être guidée.

5. Dispositif (1) selon la revendication 2, **caractérisé en ce que** l'ensemble séparateur (61) comprend une deuxième unité à rouleaux (75) avec deux rouleaux (76, 77) opposés l'un à l'autre, entre lesquels la bande de matière (19) peut être guidée.

6. Dispositif selon la revendication 4, **caractérisé en ce qu'**un élément de découpe (62) de l'ensemble séparateur (61) est disposé entre la première unité à rouleaux (70) et la deuxième unité à rouleaux (75).

7. Dispositif (1) selon au moins une des revendications précédentes, **caractérisé en ce que** ledit dispositif (1) comprend un deuxième réservoir (81) recevant une bande de matière (19) allongée.

8. Dispositif (1) selon au moins une des revendications précédentes, **caractérisé en ce que** l'ensemble de transport (2) est disposé contre un bras (7) pivotant autour d'un axe vertical.

9. Dispositif (1) selon au moins une des revendications précédentes, **caractérisé en ce que** l'ensemble de transport (2) comprend un dispositif d'appui (6) qui soutient au moins temporairement l'assortiment de marchandises et **en ce que** l'unité de rapprochement (17) est disposée en dessous de ce dispositif d'appui (6).

10. Procédé pour former des piles à partir d'assortiments de marchandises (10) et d'intercalaires (13), comprenant les étapes suivantes :
- rapprochement d'un premier intercalaire (13) dans une première zone définie au moyen d'une unité de rapprochement (17) dans une première direction de transport (T)
- transport de l'assortiment de marchandises (10) dans la zone définie par un ensemble de transport (2), **caractérisé en ce qu'**une bande de matière allongée pliée plusieurs fois, dont les intercalaires (13) sont détachables, est conduite vers l'unité de rapprochement (17), et les intercalaires (13) détachés de cette bande de matière au moyen d'un ensemble séparateur (61).

11. Procédé selon au moins une des revendications précédentes, **caractérisé en ce que** la bande de matière (19) présente une pluralité d'emplacements de pliage (21), et **en ce que** le détachement des intercalaires (13) est effectué à distance de ces emplacements de pliage (21).

12. Procédé selon au moins une des revendications précédentes, **caractérisé en ce que** l'ensemble séparateur (61) coupe la bande de matière (19) dans une direction perpendiculaire à la direction de transport.

13. Procédé selon au moins une des revendications précédentes, **caractérisé en ce que** la bande de matière (19) est conduite d'une manière cyclique vers l'unité de rapprochement (17).
